# EUROPÄISCHE PATENTANMELDUNG

(11) **EP 1 227 124 A1**
(43) Veröffentlichungstag der Anmeldung: **31.07.2002**
(21) Anmeldenummer: 02000371.1
(22) Anmeldetag: 05.01.2002
(51) Int. Cl.: C08K 11/00, E04C 2/02, C08L 99/00

(54) **Formteil oder Baustoff für den Einsatz in Bauwerken**

(30) Priorität: 26.01.2001 DE 20101411 U
(71) Anmelder: Thomsen, Richard, 25548 Kellinghusen (DE)
(72) Erfinder: Thomsen, Richard, 25548 Kellinghusen (DE)
(74) Vertreter: Patentanwälte Hauck, Graalfs, Wehnert, Döring, Siemons

(57) **Zusammenfassung**

Formteil, insbesondere für den Einsatz in Bauwerken, das aus einer Mischung aus einem Anteil an Knochen-/Fleischmehl und einem Anteil aus einem aushärtbaren Bindemittel zusammengesetzt ist und durch Aushärtenlassen der fließfähigen oder pastösen Mischung in einer Form gewonnen ist.

## Beschreibung

Die Erfindung bezieht sich auf ein Formteil für den Einsatz in Bauwerken nach den Ansprüchen 1, 2 oder 6.

Bauelemente für den Hochbau sind mit den verschiedensten Materialien und in den verschiedensten Zusammensetzungen bekannt. Auch für den Tiefbau, insbesondere den Straßenbau und den Bau von Dämmschutzwänden an Straßen und Autobahnen werden die verschiedensten Materialien verwendet. Für den letzteren Fall, jedoch auch vielfach für Hochbauten sind besondere Dämmschutzmaßnahmen erforderlich, um die akustische Übertragung zu dämpfen. Bei Gebäuden ist zum Beispiel bekannt, in Decken sogenannte Trittschalldämmungen anzuordnen. Entsprechende Schallschutzmaßnahmen werden auch für Gebäudewände vorgesehen.

Insbesondere für den Hochbau sind auch wärmedämmende Maßnahmen vorzusehen. Die Bauelemente haben selbst zuweilen wärmedämmende Eigenschaften. Sie werden oft in Verbindung mit weiteren Dämmmaterialien eingesetzt. Unter Umständen werden auch separate Dämmmaterialien eingesetzt, beispielsweise Platten aus Mineral- und Glasfasern, aus Papier und Pappe, aus Perlite, anderen organischen und anorganischen Fasern, körnigem Material und dergleichen.

Der Erfindung liegt die Aufgabe zugrunde, ein Formteil oder einen Baustoff für den Einsatz in Bauwerken zu schaffen, das auf einfache und wenig aufwendige Weise hergestellt werden kann und das für die verschiedensten Anwendungszwecke, insbesondere für die Wärme- und Schalldämmung geeignet ist.

Diese Aufgabe wird durch die Merkmale der Ansprüche 1, 2 oder 6 gelöst.

Bei der Erfindung besteht das Formteil aus einer Mischung aus einem Anteil Knochen-/Fleischmehl und einem Anteil Kunstharz und/oder Bitumen. Diese Mischung wird in einen fließfähigen oder pastösen Zustand gebracht, so dass die Formgebung in einer geeigneten Form möglich ist. Das Kunstharz und/oder das Bitumen dient als Bindemittel, das durch Aushärten dem Formteil die nötige Formstabilität verleiht.

Falls eine gewisse Flexibilität des Formteils, an den jeweiligen Verwendungszweck angepasst, erforderlich ist, ist dafür zu sorgen, dass das Bindemittel nicht vollständig erstarrt, sondern nur in einem Ausmaß aushärtet, dass das Formteil eine gewisse Biegbarkeit erhält.

Anstelle von Bitumen oder Kunstharz ist auch ein anderes ähnlich geeignetes und aushärtbares Bindemittel verwendbar, soweit es für den Einsatz im Hoch-, Straßenbau oder dergleichen unbedenklich und ausreichend wirksam ist.

Die Formgebung kann in einer üblichen Pressform oder auch durch Spritzformen stattfinden.

Schließlich ist auch denkbar, aus der Mischung aus Knochen-/Fleischmehl und Kunstharz oder Bitumen durch Wiederzerkleinern nach dem Aushärten eines Formteils oder einer Masse ein Granulat oder dergleichen herzustellen, das etwa für Schalldämpf- und Wärmedämmzwecke eingesetzt wird.

Es ist an sich bekannt, Tierknochen als Schlachtabfälle in Rohstoffen nach verschiedenen Verfahren zu verarbeiten. Den Verfahren ist gemeinsam, dass man das Knochenfett durch Extraktion oder durch Kochen im Autoklaven entfernt. Der entfettete Knochen wird zerschrotet bzw. gemahlen, und der hierbei entstehende abgesiebte feine Grus liegt als un- oder nicht entleimtes Knochenmehl vor. Es ist bekannt, ein derartiges unentleimtes Knochenmehl zum Düngen zu verwenden. Es ist ferner bekannt, unentleimtes Knochenschrot als Futtermittelzusatz zu verwenden, wobei gröberer Schrot durch Dämpfen entleimt werden kann. Es ist ferner bekannt, entfettetes und entleimtes Knochenmehl in einen Phosphatdünger zu verwandeln, der besonders für Sandböden geeignet ist. Es ist schließlich bekannt, durch Verarbeitung von entleimtem Knochenmehl eine formbare Masse zu bilden, aus der durch geeignete Formgebung, wie Drechseln, Schnitzen, usw. Teile hergestellt werden können wie Stock- und Schirmgriffe, Klaviaturen, Schachfiguren, Knöpfe und dergleichen.

Bei dem erfindungsgemäßen Formteil wird vor allen Dingen unentleimtes Knochenmehl verwendet, da das Entleimen mit einem gewissen Aufwand verbunden ist. Es versteht sich, dass auch entleimtes Knochenmehl verwendet werden kann.

Die erfindungsgemäßen Formteile können insbesondere als Dämmstoffe für den Hochbau eingesetzt werden. Erfindungsgemäß kann auch eine Beschichtung von Bauteilen mit einer erfindungsgemäßen Mischung erfolgen. So ist etwa denkbar, plattenartige Bauelemente aus Beton oder einem anderen Baustoff mit einer Beschichtung zu versehen, die aus einer Mischung aus Knochen-/Fleischmehl und Kunstharz oder Bitumen besteht, um die schall- und wärmedämmende Eigenschaft des Bauelements zu verbessern.

Das erfindungsgemäße Formteil weist Vorteile auf. So hat es ein relativ geringes Gewicht, zumindest deutlich unter dem von Beton. Daher ist es leichter zu transportieren und zu handhaben. Gleichwohl weist es eine gewisse Festigkeit auf, so dass es auch begrenzt zu statischen Zwecken einsetzbar ist. Es hat ferner den Vorteil, dass es aufgrund der mehr oder weniger porösen Struktur wärme- und schalldämpfend ist.

Schließlich kann die beschriebene Mischung für das erfmdungsgemäße Formteil auch etwa dazu verwendet werden, andere Bauteile zu bilden, wie Pfähle für Gartenzäune oder andere Anwendungen in der Garten- und Landschafisgestaltungstechnik.

Nachstehend ein Beispiel für eine Mischung für das erfindungsgemäße Formteil:
10 Gew.-% Kunstharz oder Bitumen
90 Gew.-% Knochen-/Fleischmehl.

Die Körnung des Knochen-/Fleischmehls richtet sich nach dem Einsatzzweck des Formteils bzw. des Baustoffs. Es können auch unterschiedliche Körnungsgrößen in einer Mischung vorgesehen werden, d.h. eine vorgegebene Sieblinie.

## Patentansprüche

1. Formteil, insbesondere für den Einsatz in Bauwerken, das aus einer Mischung aus einem Anteil an Knochen-/Fleischmehl und einem Anteil aus einem aushärtbaren Bindemittel zusammengesetzt ist und durch Aushärtenlassen der fließfähigen oder pastösen Mischung in einer Form gewonnen ist.

2. Formteil, insbesondere für den Einsatz in Bauwerken mit mindestens einer Tragschicht aus einem geeigneten formstabilen Baustoff bzw. Baustoffgemisch und einer auf der Tragschicht aufgebrachten zweiten Schicht, die aus einem Anteil aus aushärtbarem Bindemittel und einem Anteil von Knochen-/Fleischmehl besteht.

3. Formteil nach Anspruch 1 oder 2, **dadurch gekennzeichnet, dass** als Bindemittel Kunstharz oder Bitumen vorgesehen ist.

4. Formteil nach Anspruch 1 bis 3, **dadurch gekennzeichnet, dass** es als wärmedämmende und/oder schalldämpfende Tafel oder dergleichen für den Hoch- oder Straßenbau ausgebildet ist.

5. Formteil nach einem der Ansprüche 1 bis 4, **dadurch gekennzeichnet, dass** die Mischung etwa 10 Vol.-% Kunstharz und/oder Bitumen enthält und 90 Vol.-% Knochen-/Fleischmehl.

6. Pulverförmige oder granuläre Mischung, insbesondere für Bauzwecke, die aus einer Mischung aus Knochen-/Fleischmehl und einem aushärtbarem Bindemittel zusammengesetzt ist, insbesondere Kunstharz oder Bitumen.
